# EUROPEAN PATENT SPECIFICATION

(11) **EP 3 221 116 B1**
(45) Date of publication and mention of the grant of the patent: **26.12.2018**
(21) Application number: 15812895.9
(22) Date of filing: 18.11.2015
(51) Int. Cl.: B29C 45/44, B29C 45/00

(54) **A METHOD FOR PRODUCING A PACKAGE CLOSURE**
VERFAHREN ZUR HERSTELLUNG EINES VERPACKUNGSVERSCHLUSSES
PROCÉDÉ DE PRODUCTION D'UNE FERMETURE D'EMBALLAGE

(30) Priority: 21.11.2014 SE 1451405
(43) Date of publication of application: 27.09.2017
(73) Proprietor: Petro-Pack AB, 341 34 Ljungby (SE)
(72) Inventor: NILSSON, Hugo, S-341 33 Ljungby (SE)
(74) Representative: Persson, Albin
(86) International application number: PCT/SE2015/051240
(87) International publication number: WO 2016/080898

(56) References cited:
- WO-A1-2014/088500
- US-A- 4 806 301
- US-A- 4 909 404
- US-A- 5 076 453
- US-A- 5 609 894

## Description

### FIELD OF THE INVENTION

The invention relates to a method for producing a package closure having a neck with an outer thread and a cap with an inner thread. This type of methods are used for producing package closures having a neck, which also can be called spout or closure spout, and a screw cap. Such package closures are used for different types of packages, such as packages for liquid foodstuff, such as milk, juice, water, yoghurt and similar but can be used also for other types of packages. Package closures of this type are arranged in plastic materials having an inherent flexibility, such as thermoplastic materials or other plastic materials having similar properties. Package closures of this type are generally used for packages of carton or a combination of carton and plastic materials, such as flat top carton packages or gable top carton packages, which, for example, can be folded from a blank, wherein the package closure is fastened to the package.

### PRIOR ART

One prior art method for producing a package closure having a neck and a cap is disclosed in WO2014/088500. WO2014/088500 comprises the steps of forming the neck and cap by means of movable jaws and inner and outer tool cores, displacing the outer tool core to disengage the package closure therefrom, and by means of an ejector displacing the neck into the cap.

### SUMMARY OF THE INVENTION

An object of the invention is to provide a method for producing a package closure in an efficient way and to make it possible to provide a favourable structure of the package closure. The invention results in an efficient production method, in which the entire package closure can be produced in a single tool without subsequent mounting of different parts of the package closure, while the package closure according to the invention simultaneously can be arranged tamper-proof and resealable. Further, the invention makes it possible to provide a reliable tamper-evident ring being easy to brake during intentional opening of the package closure. Although not being part of the current invention, a device for producing a package closure is also disclosed.

The present invention relates to a method for producing a package closure having a neck and a cap, comprising the steps of
a) by means of movable jaws and a tool core forming the neck with an outer thread and the cap with an inner thread, wherein an interior of the neck is formed by an outer first tool core part, and wherein an interior of the cap is formed by an inner second tool core part and a third tool core part, the thread of the cap being formed by the third tool core part,
b) removing the jaws from the formed package closure,
c) axially displacing the second tool core part in relation to the first tool core part and thereby separating the cap and the neck,
d) axially displacing the third tool core part in relation to the second tool core part and thereby disengaging the cap from the third tool core part while keeping the second tool core part engaged with the cap,
e) displacing the neck axially in relation to the cap and bringing the thread of the cap into engagement with the thread of the neck through an inherent flexibility of the package closure to form a package closure having a cap mounted on the neck, and
f) displacing the package closure in relation to the second tool core part to disengage the package closure from the tool core.

By means of the structure of the device, wherein the tool core comprises a first, second a third tool core parts, and wherein the second and third tool core parts are displaceable in relation to the first tool core part and each other result in favourable possibilities in producing a package closure in which the cap is mounted on the neck without any conventional tightening of the cap by rotation.

The package closure can be moulded in a single piece, after which the cap is separated from the neck and arranged on the neck by displacement of the tool core parts and an ejector. Hence, a simple and efficient manufacturing method is provided, wherein the package closure can be produced in a single mould tool.

A tamper-evident ring (also called tamper ring, tamper-proof ring, etc.) can be formed between the cap and the neck, and tamper protrusions can be formed on the neck, wherein the tamper protrusions can be brought to engage holes in the tamper-evident ring by the displacement of the neck in relation to the cap. Hence, a tamper proof package closure is provided in an efficient way, wherein the tamper-evident ring can be formed to easily brake due to intentional opening of the package closure.

A flexible projection can be formed in a top portion of the cap, which projection is arranged with a rigidness to retain the cap engaged with the second tool core part when the cap and neck are brought together. Hence, no external tool or counterpart is required to keep the cap in position when the neck is inserted into the cap or the cap is mounted on the neck.

For example, the package closure is produced in a heated process, such as a moulding process, compression moulding process or similar, wherein the plastic material is heated and thereby softened. For example, the jaws are heated. While the plastic material still is heated to a predetermined temperature, which is dependent on the plastic material used, the plastic material is soft enough for the threads to be pushed into each other by axial displacement without screwing and without permanent deformation of the plastic material.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiment examples and with reference to the appended drawings, in which
Figs. 1-5 are schematic section views illustrating a part of a device for producing a package closure, the method of production of the package closure and a package closure during production according to one embodiment of the present invention,
Figs. 6-10 are schematic section views according to Figs. 1-5, showing the device in another section, which has been rotationally displaced in relation to Figs. 1-5,
Fig. 11 is a schematic perspective view of a package closure during production according to one embodiment, wherein a neck and a cap of the package closure are illustrated after moulding but before being pushed together,
Figs. 12 and 13 are side views of the package closure of Fig. 11,
Figs. 14 and 15 are section views of the package closure of Fig. 11,
Figs. 16 and 17 are section views of the package closure of Fig. 11 from another rotational angle,
Figs. 18-20 are schematic section views showing the finalised package closure and opening thereof during breaking of the tamper-evident ring,
Fig. 21 is a schematic view of a package closure according to one alternative embodiment,
Fig. 22 is a schematic section view of the neck of the package closure of Fig. 21, illustrating a sealing flange of the neck, and
Fig. 23 is a schematic section view of the package closure according to Fig. 21, illustrating sealing of the package closure by means of the sealing flange of the neck and a projection of the cap.

### THE INVENTION

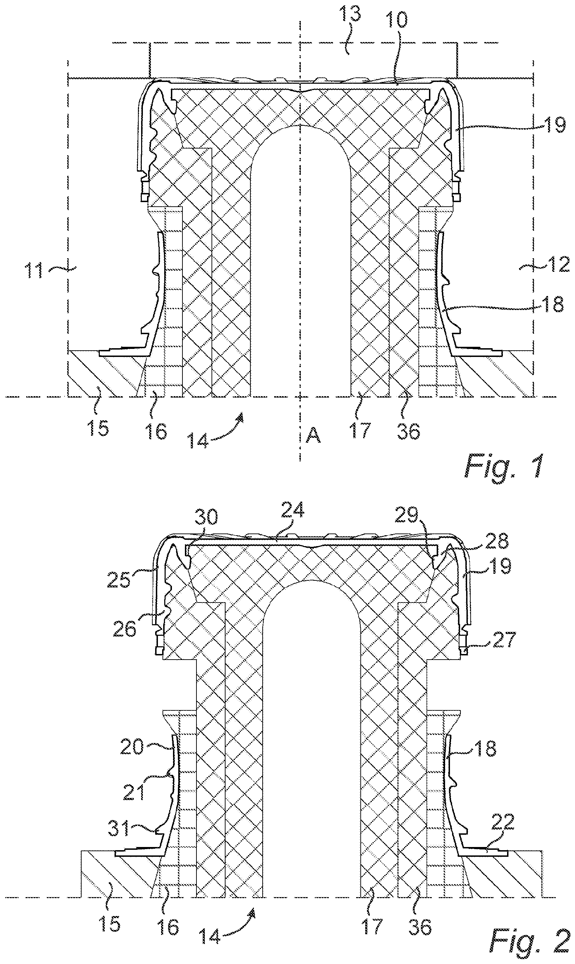

Referring to Fig. 1 a package closure 10 during production and a part of a device for producing said package closure 10 is illustrated schematically. The package closure 10 is arranged in a flexible material, such as a suitable plastic material. For example, the package closure 10 is formed in a suitable thermoplastic, such as polyethylene.

In the illustrated embodiment the device and the package closure 10 comprises a centre axis A, wherein the device further comprises a movable first jaw 11, a movable second jaw 12, a counterpart 13 and a tool core 14. The tool core 14 interacts with the jaws 11, 12 and the counterpart 13 to form a mould for receiving an amount of plastic material for producing the package closure 10. The device further comprises an ejector 15 for ejecting the produced package closure 10, which is described in more detail below. The device is arranged as a moulding tool for moulding plastic materials. For example, the device is arranged for moulding plastic materials, wherein the jaws 11, 12 and/or the tool core 14 can be heated and/or cooled in a conventional manner. The jaws 11, 12 and the tool core 14 are arranged with a particular form for providing the mould for producing the package closure 10 according to the invention, which form is evident by the description of the special features of the package closure 10 below.

The tool core 14 comprises an outer first tool core part 16, an inner second tool core part 17 and a third tool core part 36. The first tool core part 16 and the second tool core part 17 are displaceable in relation to each other. Hence, the first tool core part 16 and/or the second tool core part 17 is/are movable and displaceable in the axial direction. For example, the third tool core part 36 is displaceable in relation to the first and/or second tool core parts 16, 17.

In Fig. 1 the device is illustrated in a position in which the jaws 11, 12 interact with the counterpart 13 and the tool core 14 to form the mould for moulding the package closure 10 and in which a package closure 10 is in the mould, i.e. in contact with the jaws 11, 12, the counterpart 13 and the tool core 14.

The jaws 11, 12 are movable in a direction substantially perpendicular to a centre axis A of the package closure 10, such as in the radial direction, between a position for forming the package closure and a position in which the package closure 10 is disengaged from the jaws 11, 12. Further, the counterpart 13 is movable in a direction along the centre axis A of the package closure, between a position for forming the package closure and a position in which the package closure 10 is disengaged from the counterpart 13.

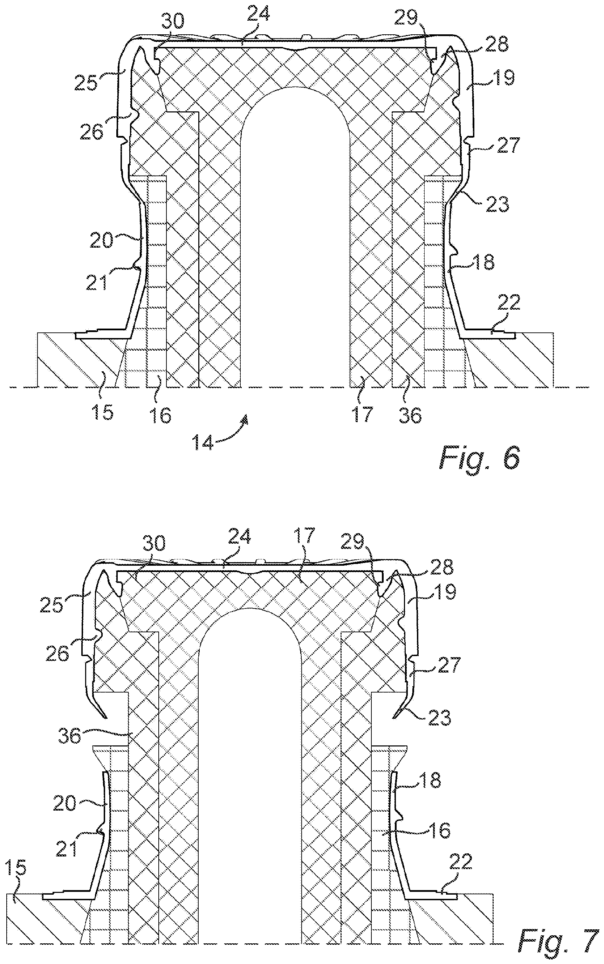

In the illustrated embodiment the package closure 10 is substantially cylindrical having a circular cross section. The package closure 10 comprises a neck 18 with an opening, and a cap 19 for closing the opening as indicated in Fig. 2. The neck 18 comprises an axially extending tubular first portion 20 and a radially extending thread 21, such as an external thread. In the illustrated embodiment the first portion 20 is arranged with a second portion 22 arranged in an angle to the first portion 20 to facilitate connection to a package. For example, the second portion 22 is arranged for connection to a package by melting, welding, gluing or in any other suitable manner. For example, the second portion 22 projects substantially radially in relation to the first portion 20. During moulding of the package closure 10 the neck 18 is connected to the cap 19 through connecting portions 23, which are illustrated in Fig. 6. During production the cap 19 is connected to the neck 18, wherein the neck 18 and the cap 19 are formed in a single piece as one integrated unit of continuous plastic. At that time the cap 19 is connected to the neck 18 through the connecting portions 23. Alternatively, the neck 18 and the cap 19 are formed separately.

The cap 19 comprises a radially extending top portion 24 and an axially extending and cylindrical or tubular portion 25 connected thereto. The tubular portion 25 is arranged with an internal thread 26 for interaction with the thread 21 of the neck 18. The package closure 10 comprises a tamper-evident ring 27. The tamper-evident ring 27 is formed at the tubular portion 25 of the cap 19, such as between the tubular portion 25 and the connecting portions 23.

The cap 19 is provided with a projection 28 projecting from an interior side of the cap 19, such as the top portion 24. The projection 28 is arranged between the centre axis A and the tubular portion 25. The projection 25 is flexible and arranged for interaction with the second tool core part 17, so that the cap 19 is connected to the second tool core part 17 through the projection 28 during the production of the package closure 10. In the illustrated embodiment the projection 28 is arranged with a radially extending flange 29. To temporarily fasten the cap 19 the second tool core part 17 is provided with a recess 30 for receiving the projection 28. For example, the recess 30 extends partially radially inwards for receiving the projection 28 and holding the cap 19 during production thereof.

The package closure 10 is, for example, moulded in a single piece, wherein the cap 19 and the neck 18 are an integrated unit. The jaws 11, 12 and the tool core 14 form a continuous mould for forming the neck 18 and the cap 19 in a single piece.

With reference to Fig. 2 the jaws 11, 12 and the counterpart have been removed, wherein the package closure 10 is illustrated during production thereof together with the first tool core part 16, the second tool core part 17, the third tool core part 36 and the ejector 15. The first tool core part 16 is arranged for forming the interior of the neck 18, wherein the second and third tool core parts 17, 36 are arranged for forming the interior of the cap 19. The third tool core part 36 extends axially between the first and second tool core parts 16, 17 at the base of the tool core 14 and then extends radially to form the outer radial surface of the tool core 14 at a top of the tool core 14. Hence, the first tool core part 16 forms the outer radial surface of the tool core 14 at the base thereof to form the interior of the neck 18, wherein the third tool core part 36 forms the outer radial surface of the tool core 14 at the top to form a radial interior surface of the cap 19. The third tool core part 36 is arranged for forming the thread 26 of the cap 19, wherein the second tool core part 17 is arranged for forming the top part 24 of the cap 19, or at least a portion thereof, and the projection 28.

The second tool core part 17 and the third tool core part 36 are axially displaceable in relation to the first tool core part 16 and, for example, also in relation to the ejector 15. After moulding the package closure 10 as illustrated in Fig. 1, the second and third tool core parts 17, 36 are displaced axially forward in relation to the first tool core part 16. Alternatively, the first tool core part 16 and the ejector 15 are displaced axially backwards in relation to the second and third tool core parts 16, 17. Hence, the cap 19 with the tamper-evident ring 27 is displaced axially in relation to the neck 18, wherein the connecting portions 23 are broken, as illustrated in Fig. 7. Hence, the connecting portions 23 connecting the cap 19 and the neck 18 are broken to form the cap 19 as a first piece and the neck 18 as a second piece, wherein the first piece is not integrated with the second piece.

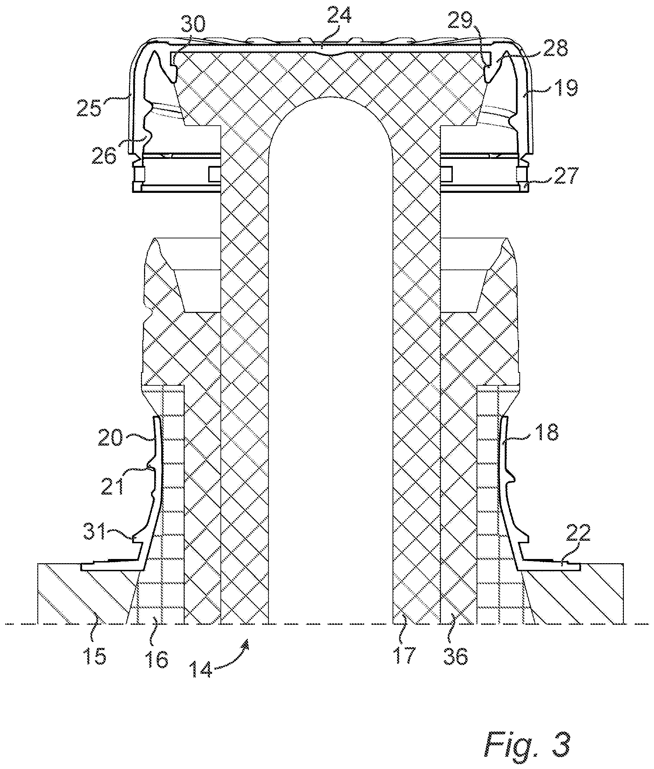

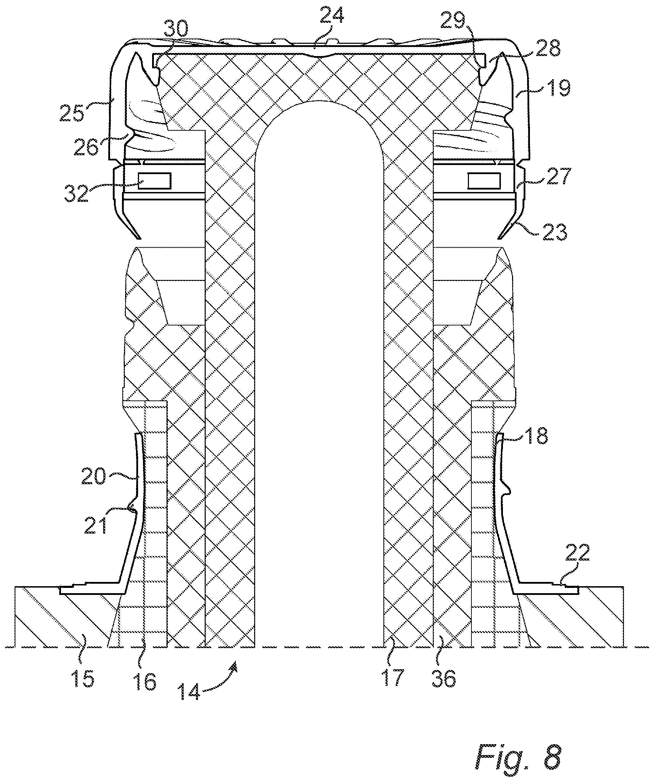

With reference to Fig. 3 the third tool core part 36 is displaced axially in relation to the second tool core part 17 to disengage the cap 19 from the third tool core part 36. For example, the third tool core part 36 is pulled back from the cap 19, while the second tool core part 17 still is connected to the cap 19. Alternatively, the second tool core part 17 is displaced axially forward in relation to the third tool core part 36. Hence, the thread 26 of the cap 19 and the tamper-evident ring 27 are disengaged from the third tool core part 36, while the top portion 24 and the projection 28 is connected to the second tool core part 17. The second tool core part 17 is displaced axially a distance from the first tool core part 16, leaving enough space for the third tool core part 36 to be pulled back and thereby be totally disengaged from the cap 19 and also leaving a gap between the cap 19 and the third tool core part 36. A corresponding view illustrating the cap with the connecting portions 23 can be found in Fig. 8.

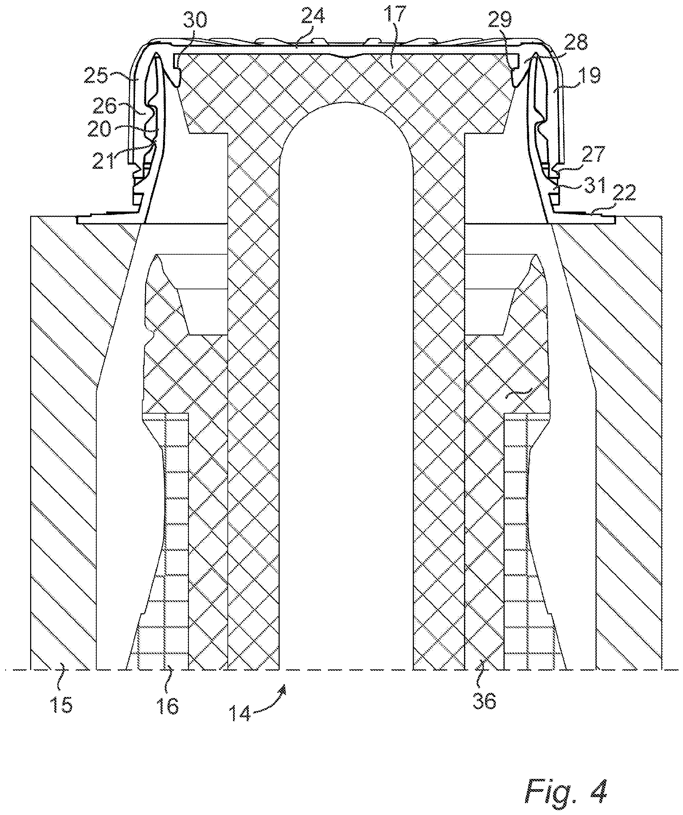

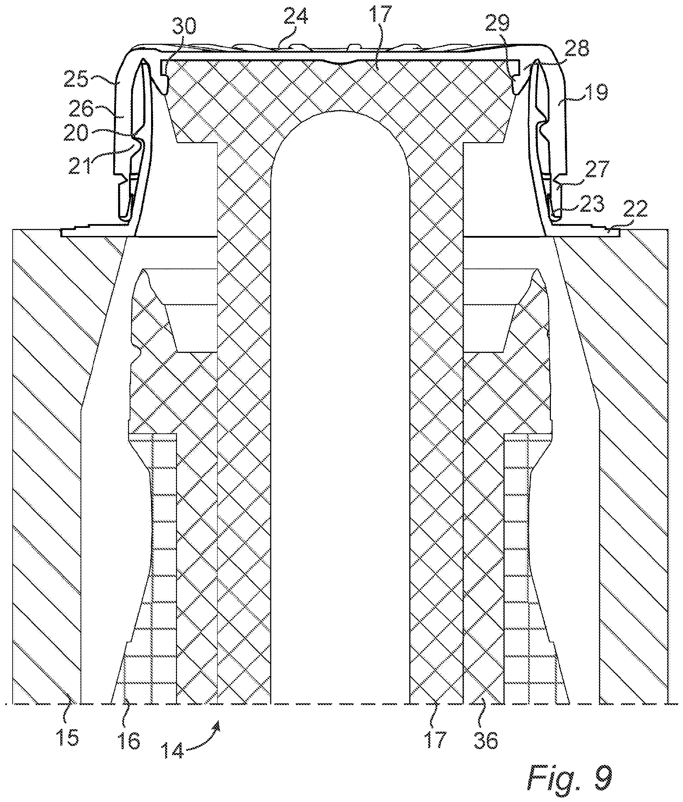

With reference to Fig. 4 the neck 18 is displaced in relation to the cap 19, wherein the thread 21 of the neck 18 is brought into engagement with the thread 26 of the cap 19, so that the cap 19 is mounted on the neck 18. For example, the neck 18 is pushed into the cap 19, while the cap 19 is kept in engagement with the second tool core part 17 by means of the projection 28 of the cap 19 and the recess 30 of the second tool core part 17. Alternatively, the cap 19 is pulled onto the neck 18. Hence, the projection 28 is rigid enough for maintaining the cap 19 in contact with the second tool core part 17 while the neck 18 is being pushed into the cap 19. Hence, the rigidness of the projection 28 is larger than a force required to bring the threads 21, 26 into engagement with each other and, optionally, also tamper protrusions 31 into engagement with the tamper-evident ring 27. For example, the neck 18 is pushed forward by means of the ejector 15. The outer diameter of at least parts of the third tool core part 36 for moulding the interior of the tubular portion 25 is larger than the inner diameter of the neck 18. Hence, the neck 18 is forced over the outer surface of the third tool core part 36, which is possible by the inherent flexible properties of the material, particularly while being heated. Simultaneously, the tamper-evident ring 27 is brought into engagement with tamper protrusions 31 extending radially from the outer surface of the neck 18 to be received in holes 32 in the tamper-evident ring 27. Hence, a portion, such as an upper portion, of the tamper-evident ring 27 is pushed over the tamper protrusions 31, wherein the tamper protrusions 31 are fitted into the holes 32 of the tamper-evident ring 27. A corresponding section view can be found in Fig. 9 from another angle.

After the neck 18 has been disengaged from the first tool core part 16 the neck 18 and the cap 19 are displaced in relation to each other in the axial direction. For example, the neck 18 is displaced into the tubular portion 25 of the cap 19, as illustrated in Fig. 4, while the cap 19 is kept in position by means of the projection 28. For example, the ejector 15 is displaced in relation to the second tool core part 17 while bringing the neck 18 along therewith. For example, the connecting portions 23 are folded inwards during displacement of the neck 18 into the cap 19. In the illustrated embodiment the neck 18 is pushed into the cap 19, so that the thread 21 of the neck 18 is pushed over the thread 26 of the cap 19, wherein the cap 19 is mounted on the neck 18 by axial displacement without any rotation of the cap 19 or neck 18. For example, the neck 18 is displaced into the cap 19 to a final position, as illustrated in Figs. 4 and 9, after which further displacement results in that also the cap 19 is displaced in the same direction, for example by one or more portions of the neck 18 engaging one or more portions of the cap 19, so that a force transferred from the neck 18 to the cap 19 exceeds the force with which the projection 28 holds the cap 19 to the second tool core part 17, whereby the package closure 10 is finished and disengaged from the second tool core part 17. After moulding the package closure 10, when the material in the package closure 10 still is soft and not yet entirely has solidified or crystallized, the neck 18 is brought over the third tool core part 36 and into the cap 19, wherein the finished package closure 10 is disengaged from the second tool core part 17.

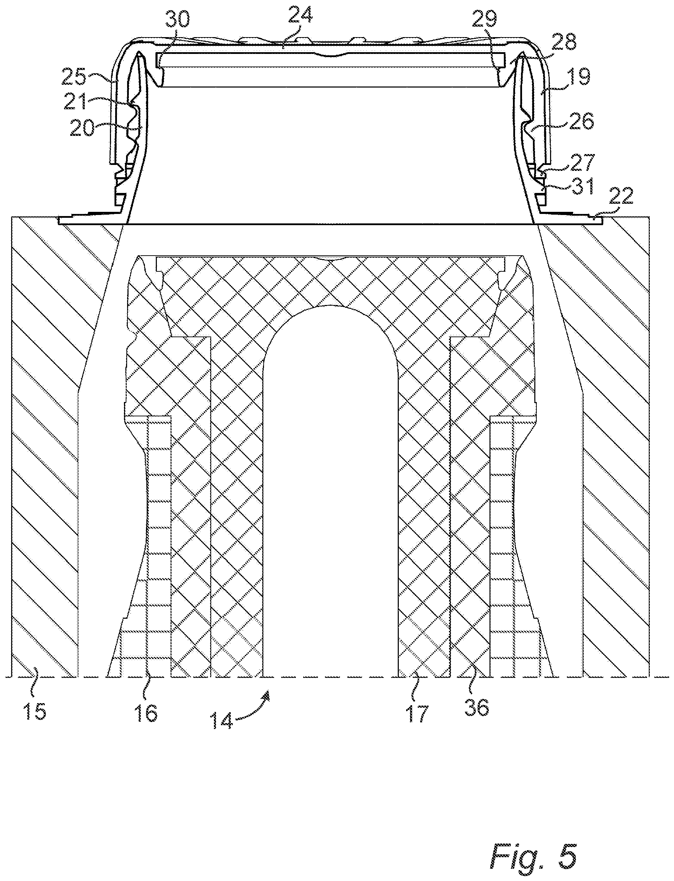

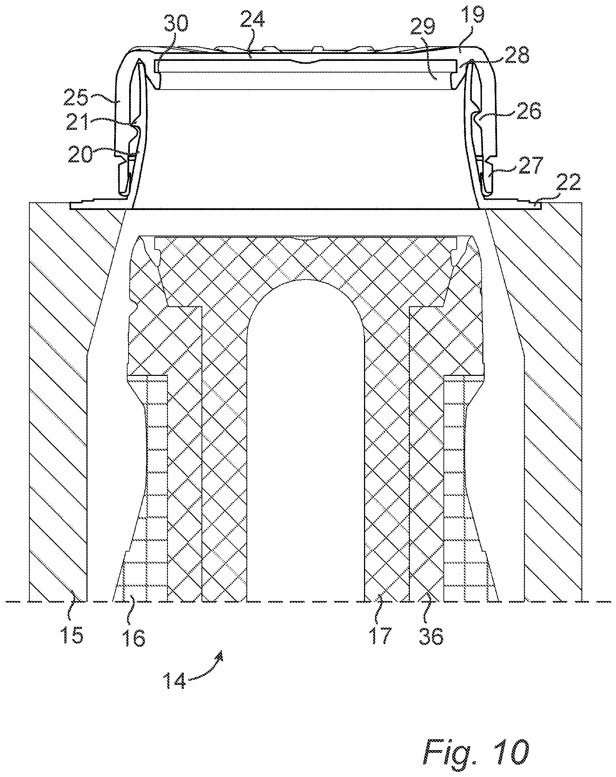

With reference to Figs. 5 and 10 the finished package closure 10, wherein the cap 19 is mounted on the neck 18, is disengaged from the tool core 14. For example, the package closure 10 is disengaged from the second tool core part 17 by means of the ejector 15 being engaged with the neck 18, such as the second portion 22 thereof, while the second tool core part 17 is displaced axially backwards, so that the projection 28 is disengaged from the recess 30 of the second tool core part 17 by its inherent flexible properties. Alternatively, the ejector 15 is displaced forward to push the package closure 10 off the second tool core part 17.

The application of the cap 19 on the neck 18 and the ejection of the package closure 10 is, for example, performed within one or a few seconds after the moulding thereof, wherein the temperature of the material in the package closure 10 is above room temperature and, for example, above 40°C or about 60°C, so that the material is semi liquid during mounting of the cap 19 on the neck 18 and ejection of the finished package closure 10.

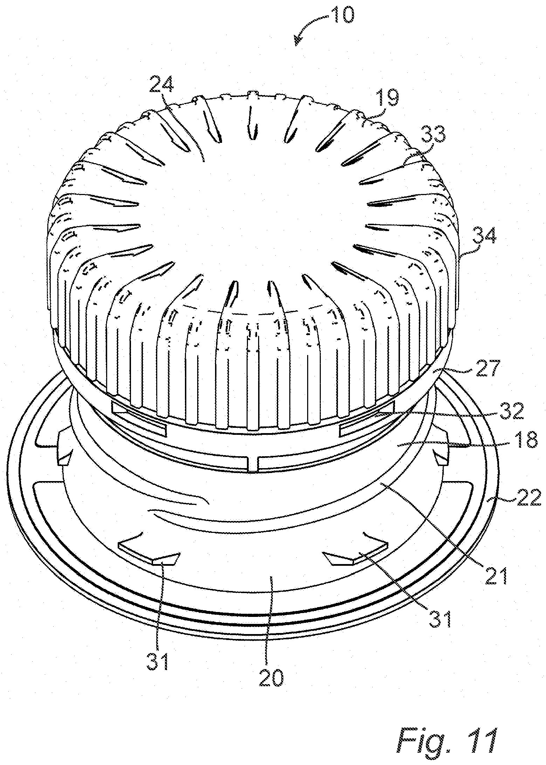

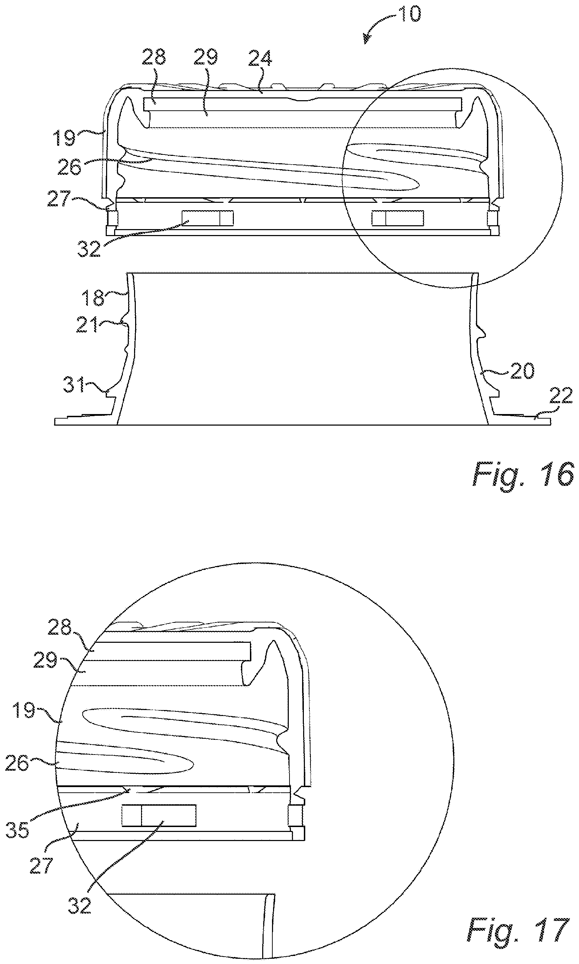

With reference to Figs. 11-17 a package closure 10 and details thereof are illustrated according to one embodiment, wherein the package closure 10 has been moulded but the neck 18 and cap 19 has not been pushed together and wherein the cap 19 is connected to the neck 18 through the connecting portions 23. Hence, in Figs. 11-17 the neck 18 has not been displaced into the cap 19. In the illustrated embodiment the cap 19 is arranged as a screw cap having the top portion 24, the tubular portion 25 and the thread 26. The neck 18 is arranged with the tubular first portion 20, the thread 21 and the second portion 22. The package closure 10 according to Figs. 11-17 further comprises the tamper-evident ring 27 with the holes 32 and the tamper protrusions 31. For example, the holes 32 and the tamper protrusions 31 are distributed around the package closure 10 and are aligned axially, so that the tamper protrusions 31 are received in the holes 32 when the cap 19 and the neck 18 are pushed together during production of the package closure 10.

In the illustrated embodiment the top portion 24 of the cap 19 is arranged with radially extending stiffening ribs 33 for reinforcement in the radial direction. For example, the stiffening ribs 33 coincide with ridges 34 on an exterior side of the tubular portion 25 of the cap. For example, the stiffening ribs 33 extend at least 1-3 mm in the radial direction from a circumference of the top portion 24, such as 2-5 mm or 3-4 mm. For example, the stiffening ribs 33 extend along at least 20% of a radius of the top portion, such as 20-50%.

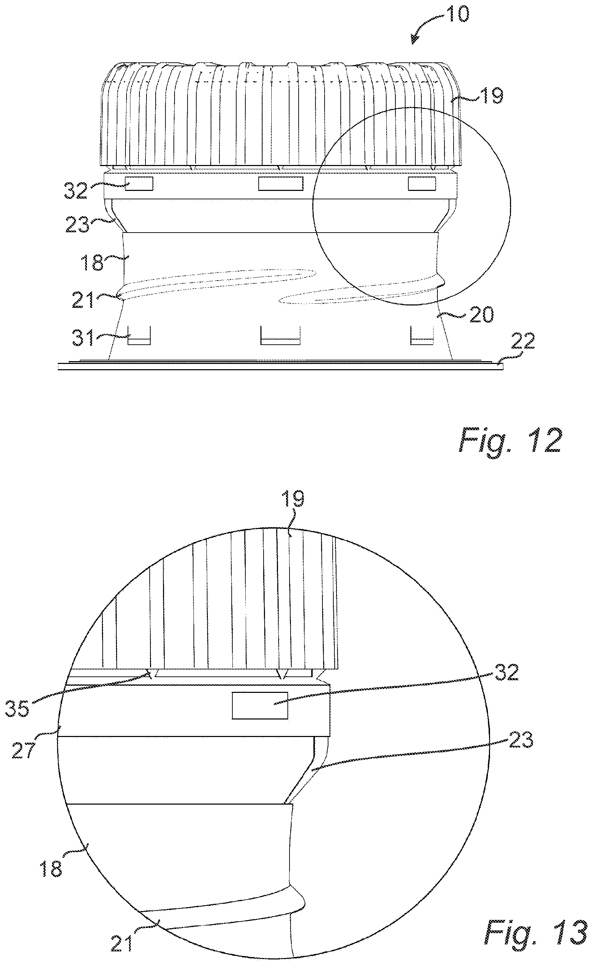

With reference particularly to Figs. 13, 15 and 17 the tubular portion 25 of the cap 19 is connected to the tamper-evident ring 27 through tamper connections 35. A plurality of tamper connections 35 are distributed around the end of the tubular portion 25 and are arranged to break when the cap 19 is rotated. For example, the tamper connections 35 are tapered, such as towards the tamper-evident ring 27.

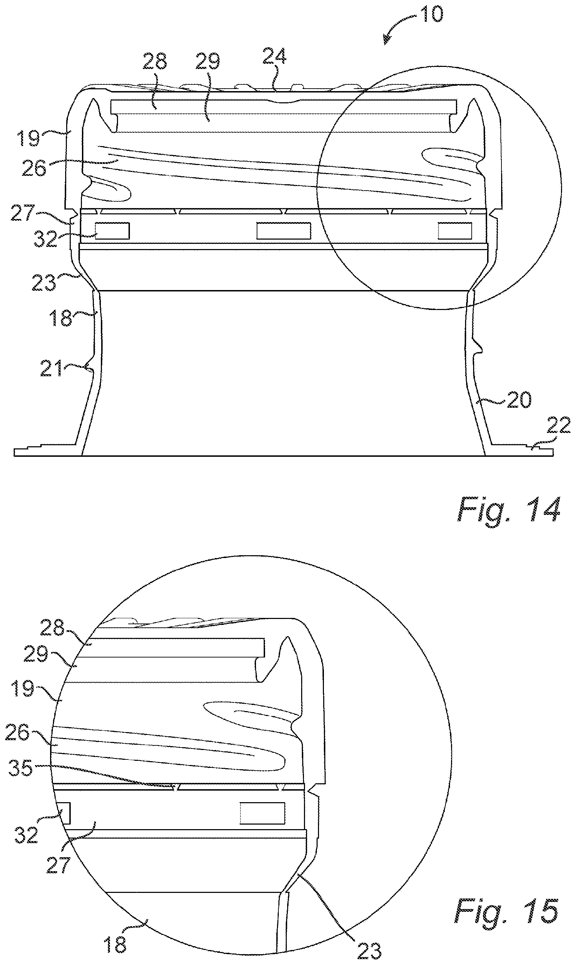

With reference to Figs. 13 and 15 the connecting portions 23 are inclined and extend radially outwards from the neck 18 to the tamper-evident ring 27. For example, the connecting portions 23 are formed as pins being tapered, such as towards the neck 18. For example, two or more connecting portions 23 connect the cap 19 with the neck 18.

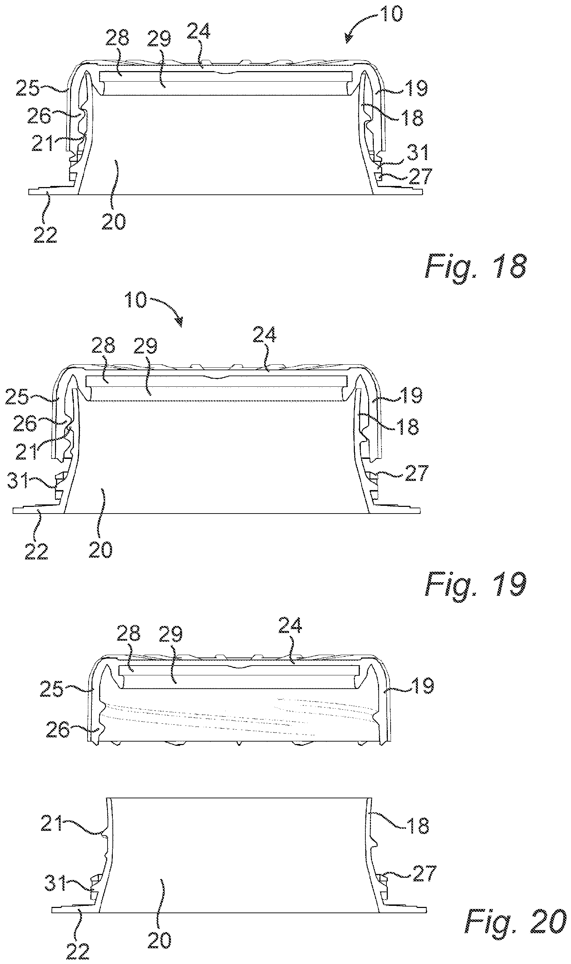

With reference to Fig. 18 the package closure 10 is illustrated in its closed and intact position, wherein the thread 26 of the cap 19 interacts with the thread 21 of the neck 18 and the tamper-evident ring 27 is intact and not broken. To open the package closure 10 the cap 19 is screwed, i.e. turned or rotated, around the centre axis in a conventional manner, so that the tamper-evident ring 17 breaks and the cap 19, by the threads 21, 26, is forced in the axial direction, usually upwards, from the neck 18, as illustrated in Fig. 19, until the cap 19 is disengaged from the neck 18, as illustrated in Fig. 20. After that the package closure 10 can be resealed in a conventional way by screwing the cap 19 onto the neck 18 again, wherein the tamper-evident ring 27 remains broken.

In the embodiment of Fig. 18 the projection 28 is arranged for interaction with an end of the neck 18 when the package closure 10 is entirely closed, so that the end of the neck 18 then is arranged between the tubular portion 25 of the cap 19 and the projection 28. The projection 28 is formed with the radially extending flange 29, wherein the flange 29 extends radially inwards and, for example, extends substantially in parallel with the top portion 24.

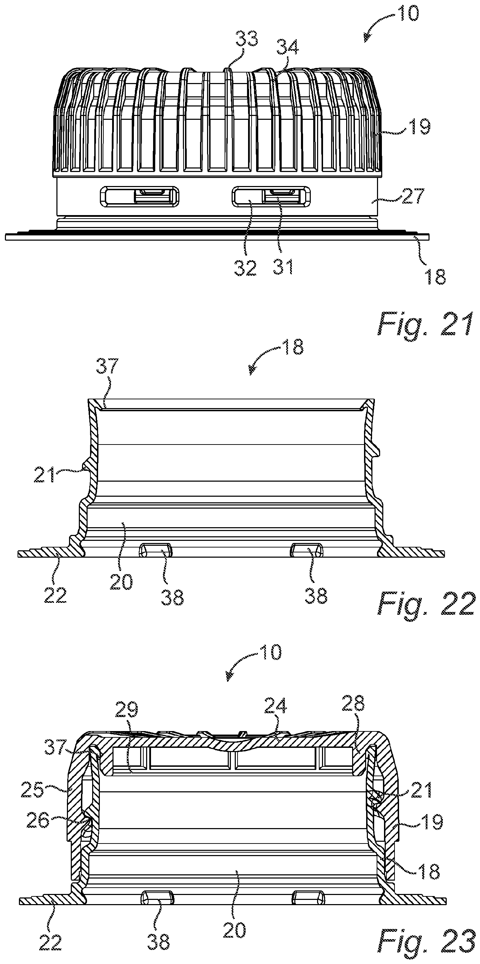

With reference to Figs. 21-23 an alternative embodiment of the package closure 10 is illustrated. In Fig. 21 the cap 19 is mounted on the neck 18. For example, the cap 19 is formed with the stiffening ribs 33 and the ridges 34 as described above. Further, the neck 18 is, e.g. formed with the tamper protrusions 31 for interaction with the holes 32 in the tamper-evident ring 27.

In Fig. 22 the neck 18 is illustrated without the cap 19, wherein the package closure is in the open position in which the cap 19 has been opened or removed from the neck 18. In the illustrated embodiment the neck 18 comprises a sealing flange 37. The sealing flange 37 extends obliquely downwards and inwards, so that the sealing flange 37 is arranged within the first portion 20 of the neck 18. For example, the sealing flange 37 form a protrusion extending inwards and downwards from a top portion of the first portion 20 of the neck 18. For example, the sealing flange 37 has a free end pointing downwards and inwards away from the cap 19. The sealing flange 37 is arranged for interaction with the projection 28 of the cap 19 as illustrated in Fig. 23 to seal the package closure 10, wherein the package closure 10 is resealable. For example, the sealing flange 37 and/or the projection 28 is somewhat flexible, e.g. due to the inherent flexible properties of the plastics material of the package closure 10. When the cap 19 is in its open position the sealing flange 37 is disengaged from the projection 28. For example, the sealing flange 37 is inclined inwards towards the centre axis A, so that the free end of the sealing flange 37 is arranged with a gap to the interior side of the first portion 20 of the neck 18 when the sealing flange 37 not is affected by the projection 28. In Fig. 23 the cap 19 is illustrated in closed position. During closing of the cap 19 the projection 28 and the sealing flange 37 interact to seal the package closure 10, wherein the cap 19 is resealable. For example, the sealing flange 37 is arranged with a flexibility allowing for a radial displacement in relation to the projection 28 during closing of the cap 19, so that the sealing flange 37 is pushed somewhat to the side radially outwards by interaction with the projection 28, so that the sealing flange 37 is biased towards the projection 28 to form a sealing when the cap 19 is closed. Hence, the sealing flange 37 is pushed radially outwards in a direction away from the centre axis A and in a direction towards the first portion 20 of the neck 18 when interacting with the projection 28, so that the free end of the sealing flange 37 is positioned at a distance from the first portion 20 of the neck 18 which is smaller than when the cap 19 is removed from the neck 18. Hence, the sealing flange 37 pushes against the projection 28 by means of the inherent flexibility of the material to form a bias or sealing force towards the projection 28. An outer side of the projection 28 is arranged at a distance from the inner side of the first portion 20 of the neck 18 forming a gap between them when the cap 19 is closed. The gap between the first portion 20 and the projection 28 is smaller than the distance between the free end of the sealing flange 37 and the first portion 20 of the neck 18 when the cap 19 is open. Hence, an inner side of the sealing flange 37 abuts against an outer side of the projection 28 in such a way that the sealing flange 37 is in a clamped position and pushes against the projection 28 with a sealing force when the cap 19 is in its closed position. For example, the sealing flange 37 is thinner than the projection 28 and optionally also than the first portion 20 of the neck 18.

With reference to Figs. 22-23 the neck 18 is formed with optional mounting projections 38. The mounting projections 38 are arranged for interacting with a tool for mounting the package closure 10 on a package (not illustrated). Hence, the mounting projections 38 are arranged to be engaged by said tool for positioning, holding and/or handling during fastening of the package closure 10 to the package. The neck 18 is formed with a plurality of mounting projections 38 distributed around an inner surface of the neck 18, such as at the inner surface of the second portion 22 of the neck 18 or at the lower part of the first portion 20. The mounting projections 38 project radially inwards towards the centre axis A of the package closure 10.

## Claims

1. A method for producing a package closure (10) having a neck (18), a cap (19) and an axis (A), comprising the steps of
a) by means of movable jaws (11, 12) and a tool core (14) forming the neck (18) with an outer thread (21) and the cap (19) with an inner thread (26), wherein an interior of the neck (18) is formed by an outer first tool core part (16), and wherein an interior of the cap (19) is formed by an inner second tool core part (17) and a third tool core part (36), the thread (26) of the cap (19) being formed by the third tool core part (36),
b) removing the jaws (11, 12) from the formed package closure (10),
c) axially displacing the second tool core part (17) in relation to the first tool core part (16) and thereby separating the cap (19) and the neck (18),
d) axially displacing the third tool core part (36) in relation to the second tool core part (17) and thereby disengaging the cap (19) from the third tool core part (36) while keeping the second tool core part (17) engaged with the cap (19),
e) displacing the neck (18) axially in relation to the cap (19) and bringing the thread (26) of the cap (19) into engagement with the thread (21) of the neck (18) through an inherent flexibility of the package closure (10) to form a package closure having a cap (19) mounted on the neck (18), and
f) displacing the package closure (10) in relation to the second tool core part (17) to disengage the package closure (10) from the tool core (14).

2. A method according to claim 1, comprising the steps of
in step a) forming the neck (18) and the cap (19) in one single integrated piece, wherein the neck (18) is connected to the cap (19) through connecting portions (23), and
in step c) displacing the third tool core part (36) together with the second tool core part (17) and thereby displacing the cap (19) in relation to the neck (18) while breaking the connecting portions (23).

3. A method according claim 1 or 2, comprising the step of
in step e) forcing the neck over the third tool core part (36) before bringing the thread (26) of the cap (19) into engagement with the thread (21) of the neck (18).

4. A method according to any of the preceding claims, comprising the steps of
in step a) forming a tamper-evident ring (27) between the cap (19) and the neck (18), and
in step e) bringing tamper protrusions (31) of the neck (18) into engagement with holes (32) in the tamper-evident ring (27) by displacement of the neck (18) in relation to the cap (19).

5. A method according to any of the preceding claims, comprising the steps of
in step a), by means of an inner second tool core part (17) forming a flexible projection (28) on an inner side of the cap (19) for interaction with the second tool core part (17), said projection (28) extending at least partially in the radial direction,
in step e), maintaining the cap (19) engaged with the second tool core part (17) by means of the projection (28), and
in step f,) by means of an ejector (15) displacing the package closure (10) in relation to the second tool core part (17), so that the projection (28) by its flexibility is disengaged from the second tool core part (17).

6. A method according to any of the preceding claims, comprising performing steps a-f in the mentioned order.

## Patentansprüche

1. Ein Verfahren zur Herstellung eines Verpackungsverschlusses (10) mit einem Hals (18), einem Deckel (19) und einer Achse (A), umfassend die folgenden Schritte:
a) Ausbilden des Halses (18) mit einem Außengewinde (21) und des Deckels (19) mit einem Innengewinde (26) mittels beweglicher Backen (11, 12) und einem Werkzeugkern (14), wobei ein Innenraum des Halses (18) durch ein äußeres erstes Werkzeugkern-Teil (16) gebildet wird, und wobei ein Innenraum des Deckels (19) durch ein inneres zweites Werkzeugkern-Teil (17) und ein drittes Werkzeugkern-Teil (36) gebildet wird, wobei das Gewinde (26) des Deckels (19) durch das dritte Werkzeugkern-Teil (36) gebildet wird,
b) Entfernern der Backen (11, 12) von dem so gebildeten Verpackungsverschluss (10),
c) Verlagern des zweiten Werkzeugkern-Teils (17) in eine axiale Richtung bezüglich des ersten Werkzeugkern-Teils (16), wodurch der Deckel (19) und der Hals (18) voneinander getrennt werden,
d) Verlagern des dritten Werkzeugkern-Teils (36) in die axiale Richtung bezüglich des zweiten Werkzeugkern-Teils (17), wodurch der Deckel (19) außer Eingriff mit dem dritten Werkzeugkern-Teil (36) gelangt, während das zweite Werkzeugkern-Teil (17) in Eingriff mit dem Deckel (19) bleibt,
e) Verlagern des Halses (18) in die axiale Richtung bezüglich des Deckels (19) und Herstellen eines Eingriffs zwischen dem Gewinde (26) des Deckels (19) und dem Gewinde (21) des Halses (18) durch eine Eigenflexibilität des Verpackungsverschlusses (10) zum Herstellen eines Verpackungsverschlusses mit einem an dem Hals (18) befestigten Deckel (19), und
f) Verlagern des Verpackungsverschlusses (10) bezüglich des zweiten Werkzeugkern-Teils (17), so dass der Verpackungsverschluss (10) außer Eingriff mit dem Werkzeugkern (14) gelangt.

2. Ein Verfahren gemäß Anspruch 1, umfassend die folgenden Schritte:
in Schritt a) Ausbilden des Halses (18) und des Deckels (19), so dass ein einzelnes einstückiges Teil vorliegt, wobei der Hals (18) durch Verbindungsabschnitte (23) mit dem Deckel (19) verbunden ist, und
in Schritt c) Verlagern des dritten Werkzeugkern-Teils (36) zusammen mit dem zweiten Werkzeugkern-Teil (17), so dass der Deckel (19) bezüglich des Halses (18) verlagert und die Verbindungsabschnitte (23) zerstört werden.

3. Ein Verfahren gemäß Anspruch 1 oder 2, umfassend den folgenden Schritt:
in Schritt e) Pressen des Halses über das dritte Werkzeugkern-Teil (36) vor Herstellen des Eingriffs zwischen dem Gewinde (26) des Deckels (19) und dem Gewinde (21) des Halses (18).

4. Ein Verfahren gemäß einem der vorigen Ansprüche, umfassend die folgenden Schritte:
in Schritt a) Ausbilden eines Originalitätsrings (27) zwischen dem Deckel (19) und dem Hals (18), und
in Schritt e) Herstellen eines Eingriffs zwischen Versiegelungsvorsprüngen (31) des Halses (18) mit Öffnungen (32) in dem Originalitätsring (27) durch Verlagern des Halses (18) bezüglich des Deckels (19).

5. Ein Verfahren gemäß einem der vorigen Ansprüche, umfassend die folgenden Schritte:
in Schritt a) Ausbilden eines flexiblen Vorsprungs (28) an einer Innenseite des Deckels (19) mittels eines inneren zweiten Werkzeugkern-Teils (17) zur Wechselwirkung mit dem zweiten Werkzeugkern-Teil (17), wobei der Vorsprung (28) sich zumindest teilweise in die radiale Richtung erstreckt,
in Schritt e) Beibehalten des Eingriffs zwischen dem Deckel (19) und dem zweiten Werkzeugkern-Teil (17) mittels des Vorsprungs (28), und
in Schritt f) Verlagern des Verpackungsverschlusses (10) bezüglich des zweiten Werkzeugkern-Teils (17) mittels eines Auswerfers (15), so dass der Vorsprung (28) aufgrund seiner Flexibilität außer Eingriff mit dem zweiten Werkzeugkern-Teil (17) gelangt.

6. Ein Verfahren gemäß einem der vorigen Ansprüche, umfassend ein Ausführen der Schritte a-f in der angegebenen Reihenfolge.

## Revendications

1. Procédé de production d'une fermeture d'emballage (10) présentant un col (18), un bouchon (19) et un axe (A), comprenant les étapes consistant à
a) au moyen de mâchoires mobiles (11, 12) et d'un noyau d'outil (14), former le col (18) avec un filetage externe (21) et le bouchon (19) avec un filetage interne (26), où un intérieur du col (18) est formé par une première partie de noyau d'outil externe (16), et où un intérieur du bouchon (19) est formé par une deuxième partie de noyau d'outil interne (17) et une troisième partie de noyau d'outil (36), le filetage (26) du bouchon (19) étant formé par la troisième partie de noyau d'outil (36),
b) retirer les mâchoires (11, 12) de la fermeture d'emballage formée (10),
c) déplacer axialement la deuxième partie de noyau d'outil (17) par rapport à la première partie de noyau d'outil (16) et séparer ainsi le bouchon (19) du col (18),
d) déplacer axialement la troisième partie de noyau d'outil (36) par rapport à la deuxième partie de noyau d'outil (17) et désengager ainsi le bouchon (19) de la troisième partie de noyau d'outil (36) tout en gardant la deuxième partie de noyau d'outil (17) engagée avec le bouchon (19),
e) déplacer le col (18) axialement par rapport au bouchon (19) et amener le filetage (26) du bouchon (19) en engagement avec le filetage (21) du col (18) grâce à une flexibilité inhérente de la fermeture d'emballage (10) pour former une fermeture d'emballage avec un bouchon (19) monté sur le col (18), et
f) déplacer la fermeture d'emballage (10) par rapport à la deuxième partie de noyau d'outil (17) pour désengager la fermeture d'emballage (10) du noyau d'outil (14).

2. Procédé selon la revendication 1, comprenant les étapes consistant à
lors de l'étape a), former le col (18) et le bouchon (19) en une seule pièce solidaire, où le col (18) est relié au bouchon (19) par le biais de parties de liaison (23), et
lors de l'étape c), déplacer la troisième partie de noyau d'outil (36) en même temps que la deuxième partie de noyau d'outil (17) et déplacer ainsi le bouchon (19) par rapport au col (18) tout en cassant les parties de liaison (23).

3. Procédé selon la revendication 1 ou 2, comprenant l'étape consistant à
lors de l'étape e), comprimer le col sur la troisième partie de noyau d'outil (36) avant d'amener le filetage (26) du bouchon (19) en engagement avec le filetage (21) du col (18).

4. Procédé selon l'une quelconque des revendications précédentes, comprenant les étapes consistant à
lors de l'étape a), former une bague inviolable (27) entre le bouchon (19) et le col (18), et
lors de l'étape e), amener des protubérances inviolables (31) du col (18) en engagement avec des trous (32) dans la bague inviolable (27) par déplacement du col (18) par rapport au bouchon (19).

5. Procédé selon l'une quelconque des revendications précédentes, comprenant les étapes consistant à
lors de l'étape a), au moyen d'une deuxième partie de noyau d'outil interne (17), former une protubérance flexible (28) sur un côté interne du bouchon (19) pour une interaction avec la deuxième partie de noyau d'outil (17), ladite protubérance (28) s'étendant au moins partiellement dans la direction radiale,
lors de l'étape e), maintenir le bouchon (19) engagé avec la deuxième partie de noyau d'outil (17) au moyen de la protubérance (28), et
lors de l'étape f), au moyen d'un dispositif d'éjection (15), déplacer la fermeture d'emballage (10) par rapport à la deuxième partie de noyau d'outil (17), de sorte que la protubérance (28) grâce à sa flexibilité est désengagée de la deuxième partie de noyau d'outil (17).

6. Procédé selon l'une quelconque des revendications précédentes, comprenant le fait de réaliser les étapes a à f dans l'ordre mentionné.
